# EUROPÄISCHE PATENTSCHRIFT

(11) **EP 0 268 106 B1**
(45) Veröffentlichungstag und Bekanntmachung des Hinweises auf die Patenterteilung: **05.01.1994**
(21) Anmeldenummer: 87115572.7
(22) Anmeldetag: 23.10.1987
(51) Int. Cl.: G07F 7/08, G07F 7/02, G06K 19/06, G06K 19/00

(54) **System zur bargeldlosen Durchführung von Transaktionen**
System for cashless transactions
Système pour effectuer des transactions sans argent liquide

(30) Priorität: 11.11.1986 DE 3638505
(43) Veröffentlichungstag der Anmeldung: 25.05.1988
(73) Patentinhaber: GAO Gesellschaft für Automation und Organisation mbH, 81307 München (DE)
(72) Erfinder: Effing, Wolfgang, Dipl.-Ing., D-8031 Gilching (DE)
(74) Vertreter: Klunker . Schmitt-Nilson . Hirsch

(56) Entgegenhaltungen:
- EP-A- 0 176 465
- FR-A- 2 503 423
- ELEKTRONIK, Band 35, Nr. 19, 19. September 1986, Seiten 99-101, München; DE; R. VOGT : "IC-Cards - neue Aspekte der Informationsverarbeitung"
- ELECTRONIQUE INDUSTRIELLE, PROCESSEURS ET SYSTEMES, Nr. 4, Juni 1986, Seiten 34-45, Paris, FR; J.P. DELLA MUSSIA : "Votre Application Carte à Mémoire pour 30 000 F"
- TOUTE L'ELECTRONIQUE, Nr. 504, Mai 1985, Seiten 70-77, Paris, FR; H. LAMBERT : "La Carte à Circuit Intégré".

## Beschreibung

Die Erfindung betrifft ein System zur bargeldlosen Durchführung von Transaktionen mit einem Datenträger mit eingelagertem IC und einem Terminal zur Kommunikation mit dem Datenträger bzw. dem IC, wobei ein im IC vorgesehener Festwertspeicher ein Anfangsguthaben enthält, das, abhängig von der mittels des Terminals ausgewählten Transaktion stufenweise vermindert wird.

Ein Datenträger oder eine elektronische Karte der oben genannten Art ist beispielsweise aus der DE-OS 30 29 641 bekannt. Die in der Entgegenhaltung beschriebene Karte mit elektronischem Schaltkreis und einem Speicher mit lösch- und beschreibbaren Speicherzellen ist geeignet zur Benutzung von Waren- und Dienstleistungsautomaten der unterschiedlichsten Art, beispielsweise Telefone, Getränkeautomaten, Automaten zur Abgabe von Lebensmitteln, Gebührenautomaten für Autobahnen usw..

Die bekannte Karte gehört zur Kategorie der sogenannten Abbuchungskarten. Eingesetzt wird hierbei ein aus einer Vielzahl von Speicherzellen bestehender nichtflüchtiger Speicher, der global gelöscht, aber zellenweise beschrieben wird. Vor der Ausgabe der Karte wird der Speicher gelöscht, so daß der Anfangszustand dem gelöschten Zustand entspricht. Dieser Anfangszustand ist einem bestimmten Geldwert gleichgesetzt, der zur Inanspruchnahme von Waren oder Dienstleistungen berechtigt. Bei jeder Benutzung der Karte wird der Anfangswert durch das Beschreiben von Speicherzellen entsprechend der jeweils in Anspruch genommenen Leistung vermindert, bis der Speicher vollständig beschrieben ist. Jede Speicherzelle repräsentiert also eine bestimmte Werteinheit (kleinste abbuchbare Einheit), so daß die Gesamtzahl der Zellen den Gesamtwert der Karte bestimmt.

Damit eine verbrauchte Karte nicht in betrügerischer Absicht in den Anfangszustand, d. h. in den gelöschten Zustand zurückversetzt werden kann, ist eine Zeile des Speichers, bestehend aus mehreren Zellen, mit einem Schlüssel geladen, der nur ein einziges Mal in den Speicher eingeschrieben werden kann und der bei jeder Transaktion von dem jeweiligen Abfragegerät bzw. Terminal auf Richtigkeit überprüft wird. Wenn mit dem Ziel der Manipulation versucht werden sollte, den Speicher zu löschen, um ihn damit in den Anfangszustand zurückzuversetzen, wird auch der Schlüssel gelöscht, da der Speicher nur global gelöscht werden kann. Da der Schlüssel aber, wie eingangs erwähnt, nicht ein zweites Mal in den Speicher geladen werden kann, ist die Karte damit unbrauchbar. Die bekannte Karte scheint sicherheitstechnisch ausreichend abgesichert, hat aber den Nachteil, daß bei üblichem Einsatz der Karte Speicher mit relativ hoher Speicherzellenzahl vorgesehen sein müssen.

Um eine Karte der genannten Art in den verschiedensten Anwendungsbereichen flexibel einsetzen zu können, ist sicherzustellen, daß einerseits der Wert pro abbuchbarer Einheit möglichst klein und andererseits die Zahl der abbuchbaren Einheiten, d. h. der Maximalwert der Karte, möglichst groß auslegbar ist. Wenn beispielsweise der Wert pro Einheit einen Pfennig und der Maximalwert der Karte DM 200,-- betragen soll, ist bei der bekannten Karte somit allein zur Abbuchung dieser 20 000 Einheiten ein Speicher von etwa 20 KBit zur Verfügung zu stellen.

Große Speicher beanspruchen große Chipflächen und sind daher, wie bekannt, entsprechend teuer. Gerade bei den genannten Anwendungen, bei denen der Datenträger ein Massenprodukt sein wird, ist es von entscheidender Bedeutung, eine möglichst kostengünstige Lösung anzustreben. Integrierte Schaltkreise mit großen Abmessungen sind demnach allein aus Kostengründen zu vermeiden. Sie sind aber auch insofern nachteilig, weil sie bekanntlich beim Einbau in flexible Karten und auch beim Gebrauch dieser Karten wesentlich leichter zerbrechen als Schaltkreise mit kleineren Abmessungen. Es ist zwar möglich, auch größere Schaltkreise mit ausreichender Lebensdauer in Karten zu implantieren. Die dafür notwendigen kartentechnologische Maßnahme sind aber relativ aufwendig und wegen der damit verbundenen höheren Kosten für Billigkarten in der Regel nicht vertretbar.

Die Aufgabe der Erfindung besteht deshalb darin, einen Datenträger mit integriertem Schaltkreis vorzuschlagen, der bei hoher Flexibilität in der Anwendung mit einem möglichst kleinen Speicher auskommt, ohne sicherheitstechnische Nachteile in Kauf nehmen zu müssen.

Die Aufgabe wird durch die im Hauptanspruch angegebenen Merkmale gelöst.

In einer bevorzugten Ausführungsform der Erfindung umfaßt der mit Steuer-, Daten- und Versorgungsleitungen versehene integrierte Schaltkreis einen flüchtigen Zähler, der in bekannter Weise mit einem Taktsignal betrieben wird sowie eine der Größe des Zählers angepaßten nichtflüchtigen Speicher. Außerdem befindet sich aus dem integrierten Schaltkreis eine Steuer- und Sicherheitslogik, die die an den Steuer- und Datenleitungen liegenden Signale verarbeitet und den Datentransfer zwischen Zähler und Speicher in noch zu erläuternder Weise steuert.

Daß bei der erfindungsgemäßen Lösung der integrierte Schaltkreis trotz eines geringen Wertes als kleinste abbuchbare Einheit und einem vergleichsweise hohen Anfangswert mit nur einem kleinen Speichervolumen auskommt, soll an einem Beispiel kurz erläutert werden.

Es sei angenommen, daß der Zähler ein 16-Bit-Zähler ist und die Werteinheit pro Taktimpuls einem Pfennig entspricht. In dieser Konfiguration ist es möglich, mit einem nur 16 Speicherzellen umfassenden Speicher einen Gesamtwert von etwa DM 650,-zu erreichen. Das Verhältnis zwischen der Speichergröße und dem Maximalwert der Karte bei gleichzeitig geringem Wert pro Einheit ist also im Vergleich zu bekannten Datenträgern erheblich verbessert. Mit dieser wesentlichen Ersparnis an notwendigem Speichervolumen und damit auch an Chipfläche, wird der Preis des Schaltkreises und der der Karte aufgrund der vereinfachten Herstellung erheblich reduziert. Daran ändert auch die Tatsache nicht, daß bei der erfindungsgemäßen Ausführungsform zusätzlich eine Steuer- und Sicherheitslogik auf dem integrierten Schaltkreis vorzusehen ist. Es hat sich nämlich gezeigt, daß der zusätzliche Aufwand in der Logik, den die erfindungsgemäße Lösung zur Absicherung gegen Manipulationen erfordert, vergleichsweise gering ist und somit den durch die drastische Speicherreduzierung erzielten Vorteil nur unwesentlich schmälert. Obwohl also Datenträger gemäß der Erfindung wesentlich billiger herzustellen sind als bekannte Datenträger, haben sie diesen gegenüber keine sicherheitstechnischen Nachteile.

Die auf dem Schaltkreis vorgesehene Steuer- und Sicherheitslogik sorgt nämlich unter anderen dafür, daß jeweils vor Beginn einer Transaktion automatisch ein Initialisierungsprozeß abläuft, der nicht in betrügerischer Absicht beeinflußbar ist. Dabei wird unter anderem der jeweils im Speicher vorhandene Restwert bzw. bei erstmaligem Gebrauch des Datenträgers der Anfangswert in den Zähler übertragen. Der Zähler ist derart ausgelegt, daß er, angesteuert durch Taktimpulse, nur in diejenige Richtung zählen kann, die den vom Speicher übertragenen Wert vermindert. Während oder auch nach Beendigung der Transaktion wird der erreichte Zählerstand in den Speicher übertragen, so daß der Speicherwert ebenfalls um die Anzahl der verbrauchten Einheiten vermindert ist.

Mit der erfindungsgemäßen Lösung ist ein Datenträger mit integriertem Schaltkreis realisierbar, der kostengünstig herstellbar und aufgrund des geringen Speicherbedarfs mit relativ kleiner Fläche in einen Datenträger implantierbar ist. Der Schaltkreis ist somit als Massenprodukt in den unterschiedlichsten Anwendungsbereichen einsetzbar. Dafür ist die Zuordnung verschiedener Kartenwerte durch Veränderung der Zahl der abbuchbaren Einheiten pro Karte ebenso einfach und praktisch ohne Mehrkosten möglich, wie die Veränderung des Wertes der einzelnen abbuchbaren Einheit bei gleichbleibendem Gesamtwert der Karte. Erweitert man bei der erfindungsgemäßen Lösung Speicher und Zähler lediglich um eine Speicher- bzw. Zählerstelle, kann beispielsweise der Gesamtwert der Karte verdoppelt werden. Bei der bekannten Karte ist dagegen der gesamte Speicher zu verdoppeln, um dieses Ziel zu erreichen.

Weitere Vorteile und Weiterbildungen der Erfindung ergeben sich aus den Unteransprüchen sowie aus der nachfolgenden Beschreibung von Ausführungsbeispielen anhand der Figuren.

Darin zeigen:
- Fig. 1: einen integrierten Schaltkreis gemäß der Erfindung in einer beispielhaften Ausführungsform,
- Fig. 2: die schematisierte Darstellung eines Speichers im gelöschten und im geladenen Zustand,
- Fig. 3a und 3d: die unterschiedlichen Phasen während eines Transaktionsvorgangs,
- Fig. 4, 5: Detailschaltungen der in der Fig. 1 gezeigten Steuer- und Sicherheitslogik.

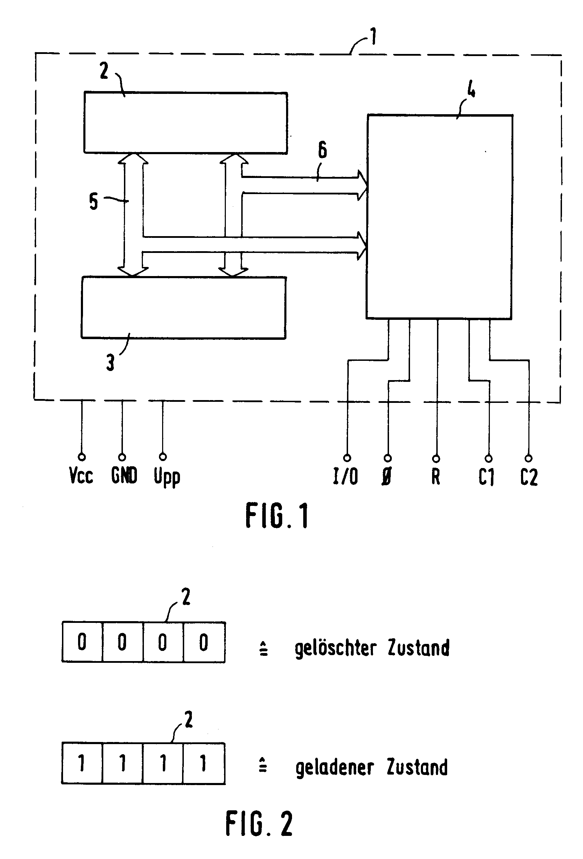

Fig. 1 zeigt in einer beispielhaften Ausführungsform einen integrierten Schaltkreis 1, wobei lediglich die zum Verständnis der Erfindung notwendigen Elemente, nämlich ein Speicher 2, ein Zähler 3 sowie eine Steuer- und Sicherheitslogik 4 gezeigt sind.

Der Speicher 2, der beispielsweise 16 Speicherzellen aufweist, ist in der sogenannten E²PROM-Technologie hergestellt. Diese Speicher sind nichtflüchtige Speicher, die elektrisch lösch- und beschreibbar sind. Beschrieben wird eine Speicherzelle dieses Speichertyps dadurch, daß auf eine sogenannte "Insel" der Zelle eine Ladung aufgebracht wird. Entsprechend wird eine Speicherzelle gelöst, indem die Ladung wieder von der "Insel" entfernt wird. Das elektrische Löschen und Schreiben geschieht über getrennte Leitungen.

Neben dem Speicher 2 enthält der integrierte Schaltkreis einen flüchtigen Daulzähler 3, der beispielsweise aus 16 bistabilen Flip-flops besteht. Der Zähler ist derart aufgebaut, daß die an den Ausgängen zur Verfügung gestellte Dualzahl sich bei jedem Taktimpuls um eins erniedrigt.

Zähler und Speicher sind über einen Daten- und Steuerbus 5, 6 mit der ebenfalls auf dem Schaltkreis befindlichen Steuer- und Sicherheitslogik 4 miteinander verbunden. Zwischen dem Speicher 2, dem Zähler 3 und der Logik 4 werden die Daten in paralleler Form verarbeitet. In der Steuer- und Sicherheitslogik 4 ist ein Parallel-Seriell-Wandler vorgesehen, der die Kommunikation mit entsprechenden Ausgabegeräten in seriellen Form ermöglicht.

Der Steuerbus 5 enthält die zur Steuerung der Einheiten notwendigen Signalleitungen, beispielsweise eine Taktleitung für den Zähler, sowie Schreib-, Lösch- und Leseleitungen für Speicher und Zähler. Die Steuerung dieser Vorgänge ist allgemein bekannt, so daß darauf hier nicht näher eingegangen werden muß.

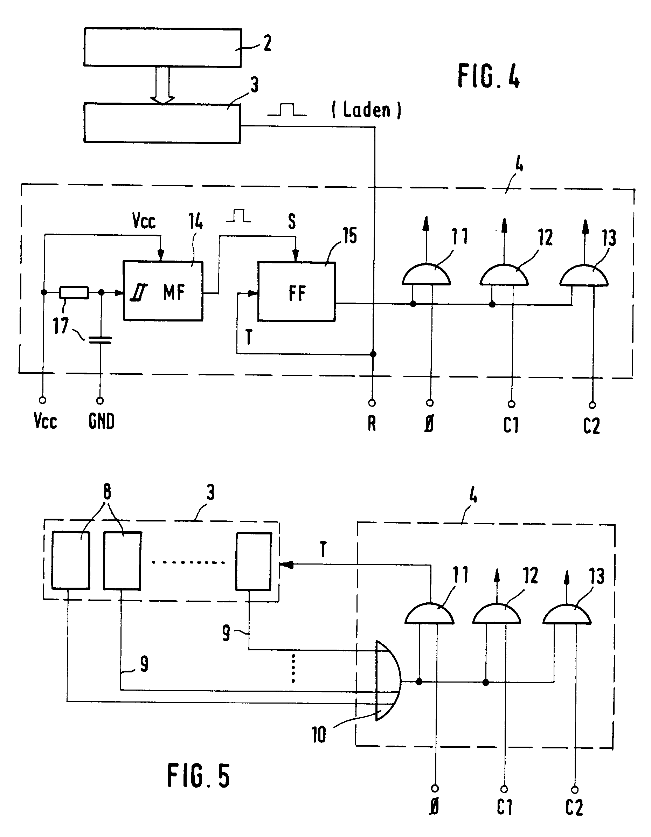

Wie die Fig. 1 zeigt, hat der integrierte Schaltkreis in diesem Ausführungsbeispiel 8 Anschlüsse. Einen Masseanschluß (GND), einen Anschluß für die Versorgungsspannung (Vcc) sowie einen Anschluß für die Programmierspannung (Upp) für den nichtflüchtigen Speicher 2. Weiterhin sind eine bidirektionale Datenleitung (I/O), eine Taktleitung (Ø) für den Zähler, eine Rücksetzleitung (R) und zwei Steuerleitungen (C1, C2) vorgesehen. Mit Hilfe der Steuerleitungen sind unterschiedliche Betriebsarten anwählbar, wie beispeilsweise das Lesen des Zählerstandes, das Betreiben des Zählers oder das Laden des E²PROMS's mit dem Zählerstand. Die Rücksetzleitung wird bei jedem Initialisierungsvorgang des integrierten Schaltkreises jeweils vor Beginn einer Transaktion benötigt. Details dazu werden im Zusammenhang mit Fig. 4 beschrieben.

In dem gezeigten Ausführungsbeispiel werden die genannten Betriebsarten vom Terminal, beispielsweise einem Telefonapparat, gesteuert. Während des Betriebes ist dafür zu sorgen, daß die Signale auf den Leitungen nicht in betrügerischer Weise manipuliert werden.

Die zur Absicherung der Leitungen notwendigen technischen Maßnahmen sind bekannt und ohnehin bei den hier in Frage kommenden Einrichtung bereits vorgesehen.

Diese Absicherungsmaßnahmen können entfallen, wenn die Signale für die Rücksetz- und Steuerleitungen nicht extern zugeführt, sondern schaltkreisintern durch die Steuer- und Sicherheitslogik 4 generiert werden. Insbesondere ist es möglich, die vor jeder Benutzung durchzuführende Initialisierung des Schaltkreises sowie die jeweilige Aktualisierung des Speichers mit dem jeweils erreichten Zählerstand schaltkreisintern zu steuern. Für diesen Fall wird die Steuer- und Sicherheitslogik 4 allerdings entsprechend umfangreicher sein.

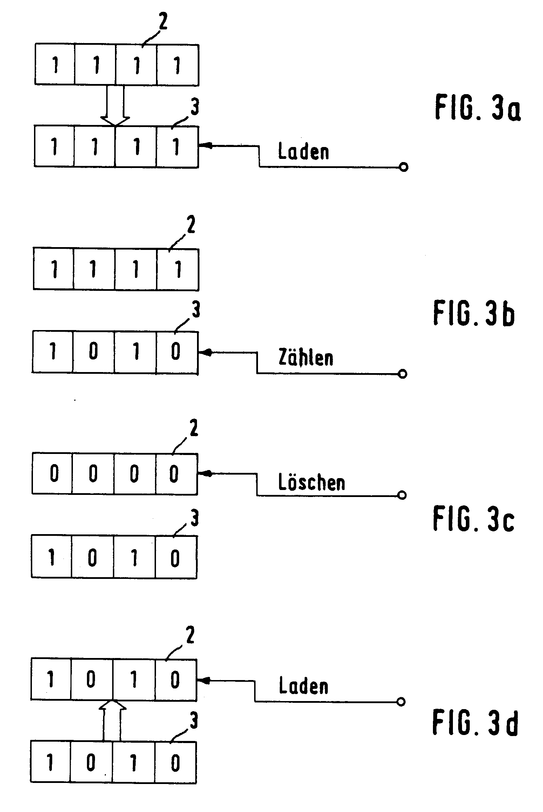

Bevor auf Einzelheiten der Steuer- und Sicherheitslogik eingegangen wird, sollen zunächst die während einer Transaktion ablaufenden Vorgänge anhand der Fig. 2 und 3 erläutert werden.

Es sei der Einfachheit halber von einem vier Speicherzellen aufweisenden Speicher 2 und einem entsprechend großen Zähler 3 ausgegangen. Weiterhin soll der gelöschte Zustand des Speichers dem entwerteten Zustand entsprechend. Erreicht der Speicher diesen Zustand, ist die Karte unbrauchbar. Diese Speicherzustand ist in der Fig. 2 symbolisch dadurch gekennzeichnet, daß jede Speicherzelle eine Null aufweist. Entsprechend weist die Wertkarte, wie sie dem Benutzer im geladenen Zustand ausgehändigt wird, in jeder Speicherzelle eine Eins auf.

Die Fig. 3a - 3d zeigen anhand eines Beispiels die vier Phasen während des Ablaufs einer Transaktion.

In der Phase 1 (Fig. 3a) wird der Inhalt des Speichers 2 in den Zähler 3 übertragen. Erst wenn dieser Vorgang abgeschlossen ist, kann der Zähler betrieben werden. Der Zähler ist in der bei diesem Ausführungsbeispiel gewählten Logik derart ausgelegt, daß der Zählerstand durch entsprechende Taktimpulse ausschließlich nur dekrementiert werden kann. Der vom Speicher in den Zähler übertragene Zählerstand kann daher immer nur vermindert werden.

Während der Phase 2 (Fig. 3b) wird der Zählerstand durch die beispielsweise von einem Telefonapparat erzeugten Taktimpulse fortlaufend dekrementiert. Die Fig. zeigt in dieser Phase den Zustand des Zählers nach 5 Taktimpulsen. Es sei angenommen, daß eine externe oder auch eine schaltkreisinterne Steuerung derart ausgelegt ist, daß jeweils nach 5 Taktimpulsen die Aktualisierung des Speichers mit dem jeweils erreichten Zählerstand vorgenommen wird. Dazu ist es bei der Verwedung eines in E²PROM-Technologie hergestellten Speichers notwendig, diesen zunächst zu löschen. Fig. 3c zeigt den in der Phase 3 erreichten gelöschten Zustand des Speichers. In der Phase 4 (Fig. 3d) schließlich wird der aktuelle Zählerstand in den Speicher durch einen Schreibvorgang übertragen.

Wie man dem anhand der Fig. geschilderten Ablauf bereits entnehmen kann, sind Sicherheitsvorkehrungen zu treffen, die verhindern, daß der jeweilige im Speicher 2 vorhandene Zählerstand durch betrügerische Maßnahmen zugunsten des Benutzers veränderbar ist. Dazu ist auf dem Schaltkreis eine Steuer- und Sicherheitslogik vorgesehen, die nachfolgend detaillierter beschrieben werden soll.

Eine erste wesentliche Funktion zur Absicherung des Schaltkreises gegenüber Manipulationen besteht darin, daß der Schaltkreis erst dann für eine Transaktion betriebsbereits ist, wenn der jeweils zuletzt im Speicher 2 nichtflüchtig gespeicherte Zählerstand als neuer Anfangswert in den Zähler 3 übertragen worden ist.

Die Fig. 4 zeigt in einer beispielhaften Ausführungsform eine Schaltung, die Teil der Steuer- und Sicherheitslogik 4 ist und die erwähnte Funktion ausführt.

Die in der Fig. 4 gezeigte Schaltung besteht im wesentlichen aus einem Monoflop 14 mit Schmitt-Trigger-Eingang, einem Flip-Flop 15 und Gattern 11, 12, 13 zum Sperren der Eingangsleitungen Ø, C1 und C2.

Mit dem Anlegen der Versorgungsspannung Vcc erzeugt das Monoflop 14 mit Schmitt-Trigger-Eingang einen definierten Impuls. Der Schmitt-Trigger-Eingang ist dazu über eine Verzögerungsschaltung 17 (RC-Glied) mit der Versorgungsspannung verbunden. Der vom Monoflop erzeugte Impuls führt auf den Setzeingang S des Flip-Flops 15, so daß dieses, unabhängig davon, welches Signal die auf den Takteingang T des Flip-Flops führende Rückseitzleitung R führt, in einen definierten Zustand geschaltet wird. Der invertierende Ausgang des Flip-Flops, der bei der gewählten Logik den Zustand log. 0 aufweist, ist mit den UND-Gattern 11, 12, 13 verbunden, so daß diese in dieser Phase die Eingangsleitungen Ø, C1 und C2 sperren.

Der vom Monoflop 14 automatisch mit dem Anlegen der Versorgungsspannung erzeugte Impuls kann auch verwendet werden, um gegebenenfalls weitere Schaltungselemente in definierte Ausgangszustände zu schalten.

Um nun den Schaltkreis in Betrieb nehmen zu können, ist ein Rücksetz-Impuls notwendig. Dieser Impuls wird einerseits als Ladeimpuls für den Zähler 3 und andererseits zeitgleich oder zeitverzögert als Rücksetzimpuls für das Flip-Flop 15 genutzt. Mit dem Ladeimpuls wird der Inhalt des Speichers 2 in den Zähler 3 übertragen. Dazu ist der Zähler mit sogenannten Setzeingängen ausgestattet, an die die Information des Speichers 2 angelegt wird. Mit dem Rücketzimpuls, der auf den Takteingang des Flip-Flops 15 führt, wird der invertierende Ausgang des Flip-Flops 15 auf log. 1 gesetzt, wodurch der Takteingang und die Steuerleitungen freigeschaltet werden.

Die erläuterte Schaltung stellt also sicher, daß der Schaltkreis erst dann in Betrieb genommen werden kann, wenn der jeweils letzte Speicherinhalt (Restwert) in den Zähler als Startwert für die folgende Transaktion übertragen worden ist.

Wie erwähnt, besteht eine zweite, sicherheitstechnisch relevante Funktion des Schaltkreises darin, daß der Zähler ausschließlich in eine einmal definierte Richtung zählt. Ein beispielsweise aus mehreren Flip-Flops aufgebauter Dualzähler stellt bei üblicher Beschaltung an seinen nicht invertierenden Ausgängen eine Dualzahl zur Verfügung, die sich bei jedem Taktimpuls um eins erhöht und entsprechend an den invertierenden Ausgängen eine Dualzahl, die sich bei jedem Taktimpuls um eins erniedrigt.

Durch eine fest verdrahtete Dekodierung der gewünschten Zählerausgänge läßt sich die geforderte Funktion auf einfache Weise realisieren.

Schließlich besteht eine dritte sicherheitstechnisch relevante Funktion der Steuer- und Logikschaltung darin, daß der sogenannte Überlauf des Zählers erkannt wird und im Falle des Überlaufs bzw. vor dem Überlauf der Schaltkreis gesperrt wird.

Nach dem anhand der Fig. 3a - 3d erläuterten Beispiel erreicht der Zähler 3 den maximalen Zählerstand (Überlauf ≙ Dezimal 15), wenn beim Zählerstand Null ein weiterer Taktimpuls dem Zähler zugeführt wird. Würde dieser Zählerstand in den Speicher übertragen, wäre die Karte wieder mit dem Ausgangswert geladen. Die sich aus dem Überlauf des Zählers ergebende Manipulationsmöglichkeit ist also auszuschließen.

Wie die Fig. 5 zeigt, kann dazu eine einfache Dekodierungslogik verwendet werden, die immer dann ein Signal erzeugt, wenn alls Flip-Flops des Zählers den Nullzustand erreicht haben. Dazu werden alle Ausgänge 9 der Flip-Flops 8 des Zählers 3 auf ein ODER-Gatter 10 geführt, das nur dann an seinem Ausgang einen log. 0 Pegel erzeugt, wenn alle Eingänge einen log. 0 Pegel aufweisen. Bei diesem Zustand werden die UND-Gatter 11, 12 und 13, die identisch mit den im Zusammenhang mit der Fig. 4 beschriebenen Gattern 11, 12, 13 sein können, gesperrt, so daß keine weiteren Taktimpulse an den Zähler 3 gelangen. Es kann also nur der Zählerstand Null in den Speicher übertragen werden. Das aber entspricht dem entwerteten Zustand, wie eingangs vorausgesetzt.

Die Erläuterungen zu den sicherheitstechnisch notwendigen Maßnahmen zeigen, daß bei der erfindungsgemäßen Lösung einerseits keine sicherheitstechnischen Nachteile gegenüber bekannten Datenträgern bestehen und daß zur technischen Realisierung der notwendigen Maßnahmen ein vergleichsweise geringer Aufwand an Logikschaltungen notwendig ist.

Die mit der erfindungsgemäßen Lösung erreichte drastische Reduzierung des Speicherbedarfs und damit der Fläche des integrierten Schaltkreises wird also durch den zusätzlichen Aufwand an Sicherheitslogik kaum geschmälert.

Wie schon erwähnt, wird eine sogenannte Abbuchungskarte vor ihrer Ausgabe an den Benutzer auf einen Anfangswert gesetzt. Dabei ist es möglich, einer Karte einen bestimmten Aufangswert zuzuordnen, indem die diesem Wert entsprechende Binärkombination in den Speicher eingeschrieben wird. Es ist aber auch möglich, beispielsweise unmittelbar nach der Herstellung des Schaltkreises generall alle Speicherzellen durch einen Schreibvorgang zu laden, so daß die Karte zunächst den maximal möglichen Anfangswert aufweist. In diesem Fall wird die jeweilige die Karten ausgebende Institution den Speicher mit Hilfe des anhand der Fig. 3a - 3d geschilderten Verfahrens auf den gewünschten Anfangswert reduzieren.

Selbstverständlich ist sicherzustellen, daß ausschließlich autorisierte Stellen in der Lage sind, den Speicher auf den Anfangswert zu laden. Je nach Konzeption der Karte ist dieser Vorgang entweder nur einemal oder aber wiederholt durchführbar.

## Patentansprüche

1. System zur bargeldlosen Durchführung von Transaktionen mit einem Datenträger mit eingelagertem IC (1) und einem Terminal zur Kommunikation mit dem Datenträger bzw. dem IC, wobei ein im IC vorgesehener Festwertspeicher (2) ein Anfangsguthaben enthält, das, abhängig von der mittels des Terminals ausgewählten Transaktion stufenweise vermindert wird, dadurch gekennzeichnet, daß
- ein Dualzähler (3) vorgesehen ist, der nur in einer Richtung betreibbar ist und an dessen Ausgang eine Dualzahl entsprechend einem Guthaben verfügbar ist.
- der Festwertspeicher (2) ein elektrisch lösch- und beschreibbarer Speicher, wie ein E²PROM ist.
- die Anzahl der Speicherplätze des Festwertspeichers den Zählerstufen entspricht.
- der Zählerstand gemäß einem über den Terminal eingegebenen Transaktionswert vermindert wird, und
- eine festverdrahtete Steuer- und Sicherheitslogik (4) vorgesehen ist, die den Datentransfer zwischen dem Speicher (2) und dem Zähler (3) in der Weise steuert, daß vor jeder Benutzung des Datenträgers der jeweils aktuelle Speicherwert in den Zähler übertragen und nach der Benutzung des Datenträgers der Speicherinhalt mit dem jeweiligen Zählerstand aktualisiert wird.

2. Datenträgeranordnung nach Anspruch 1, dadurch **gekennzeichnet,** daß die Steuer- und Sicherheitslogik (4) eine Schaltung, bestehend aus einer Dekodierungslogik (10) und mindestens einem Sperrgatter (11) aufweist, das vor einem Überlauf des Zählers dessen Betrieb blockiert.

3. Datenträgeranordnung nach Anspruch 1, dadurch **gekennzeichnet,** daß die Steuer- und Sicherheitslogik (4) eine Schaltung (14, 15) aufweist, die jeweils nach dem Anlegen der Versorgungsspannung einen definierten Impuls erzeugt, der zumindest die zum Schaltkreis führenden Steuerleitungen (Ø, C1, C2) sperrt.

4. Datenträgeranordnung nach Anspruch 3, dadurch **gekennzeichnet,** daß die Schaltung (14, 15) derart ausgelegt ist, daß die Sperre durch einen Rücksetzimpuls aufhebbar ist, wobei dieser Impuls auch als Ladeimpuls für den Zähler (3) dient.

## Claims

1. A system for cashless transactions having a data carrier with an embedded IC (1) and a terminal for communicating with the data carrier or IC, a read-only memory (2) provided in the IC containing an initial credit which is gradually reduced in accordance with the transaction selected by means of the terminal, characterized in that
a dual counter (3) is provided which is adapted to be driven in only one direction and has available at its output a dual number corresponding to a credit,
the read-only memory (2) is an electrically erasable and writable memory such as an E²PROM,
the number of storage locations in the read-only memory corresponds to the counter stages,
the counter reading is reduced according to a transaction value inputted via the terminal, and
a hard-wired control and safety logic (4) is provided for controlling the data transfer between the memory (2) and the counter (3) such that before each use of the data carrier the current memory value is transferred to the counter and after use of the data carrier the memory is updated with the current counter reading.

2. The data carrier assembly of claim 1, characterized in that the control and safety logic (4) has a circuit comprising a decoding logic (10) and at least one blocking gate (11) for blocking operation of the counter before it overflows.

3. The data carrier assembly of claim 1, characterized in that the control and safety logic (4) has a circuit (14, 15) for generating a definite pulse to block at least the control lines (Ø, C1, C2) leading to the circuit after the supply voltage is applied.

4. The data carrier assembly of claim 3, characterized in that the circuit (14, 15) is designed such that the block can be lifted by a reset pulse, this pulse also serving as a load pulse for the counter (3).

## Revendications

1. Système pour effectuer des transactions sans argent liquide, avec un support de données comprenant un circuit intégré IC incorporé (1) et un terminal pour assurer la communication avec le support de données ou le circuit intégré IC, une mémoire morte (2), prévue dans le circuit intégré IC, contenant un avoir initial, qui est diminué par étapes, en fonction de la transaction sélectionnée au moyen du terminal, caractérisé en ce que
- il est prévu un compteur dual (3) ne pouvant fonctionner que dans une direction et à la sortie duquel on peut disposer d'un nombre dual, correspondant à un avoir
- la mémoire morte (2) est une mémoire susceptible d'être effacée et réécrite par voie électrique telle qu'une E² PROM
- le nombre des emplacements de mémoire de la mémoire morte correspond aux nombres d'étapes du compteur
- l'état du compteur est diminué selon une valeur de transaction introduite par le terminal et
- un logiciel de commande et de sécurité (4) à câblage fixe est prévu, pour commander le transfert de données entre la mémoire (2) et le compteur (3), de telle manière qu'avant chaque utilisation du support de données la valeur de mémoire qui est chaque fois actualisée soit transmise au compteur et que le contenu de la mémoire soit actualisé, après l'utilisation du support de données, à l'aide de l'état du compteur correspondant.

2. Agencement de support de données selon la revendication 1, caractérisé en ce que le logiciel de commande et de sécurité (4) est un circuit composé d'une logique de décodage (10) et d'au moins une porte de blocage (11) qui, en cas de dépassement de la capacité du compteur, bloque le fonctionnement de ce dernier.

3. Agencement de support de données selon la revendication 1, caractérisé en ce que le logiciel de commande et de sécurité (4) comporte un circuit (14, 15) qui émet après chaque application de la tension d'alimentation, une impulsion définie qui bloque au moins les lignes de commande (ø, C1, C2) menant au circuit de commande.

4. Agencement de support de données selon la revendication 3, caractérisé en ce que le circuit (14, 15) est conçu de telle manière que le blocage puisse être supprimé par une impulsion de remise à l'état initial, cette impulsion servant également d'impulsion de charge pour le compteur (3).
